# EUROPEAN PATENT SPECIFICATION

(11) **EP 1 271 067 B1**
(45) Date of publication and mention of the grant of the patent: **26.10.2011**
(21) Application number: 01917770.8
(22) Date of filing: 30.03.2001
(51) Int. Cl.: F24F 11/02, H02P 6/04

(54) **AIR CONDITIONER**
KLIMAANLAGE
CLIMATISEUR

(30) Priority: 03.04.2000 JP 2000100906
(43) Date of publication of application: 02.01.2003
(73) Proprietor: DAIKIN INDUSTRIES, LTD., Osaka-shi, Osaka 530-8323 (JP)
(72) Inventor: KITAGAWA, Takeshi, Kusatsu-shi, Shiga 525-0044 (JP); YABUKI, Toshio, Kusatsu-shi, Shiga 525-0044 (JP); SAKAMOTO, Shinichi, Kusatsu-shi, Shiga 525-0044 (JP)
(74) Representative: HOFFMANN EITLE
(86) International application number: PCT/JP2001/002841
(87) International publication number: WO 2001/075372

(56) References cited:
- EP-A- 0 697 569
- EP-A- 0 866 284
- GB-A- 2 257 310
- JP-A- 10 184 592
- JP-A- 10 184 592
- JP-A- 10 262 375
- JP-A- 11 159 892
- JP-A- 11 159 892
- US-A- 4 805 689

## Description

### BACKGROUND OF THE INVENTION

### [Field of the Invention]

The invention relates to an air conditioner, and particularly to a multiple-type air conditioner having multiple indoor units connected to a single outdoor unit.

### [Description of the Background Art]

Air conditioners of a separate type formed of outdoor and indoor units have been widely used because this type of air conditioner, which selective supplies cool air and hot air, requires a relatively simple installation work, and can operate independently of other indoor units. A certain kind of separate-type air conditioner includes a plurality of indoor units connected to one outdoor unit, and can heat or cool air in a plurality of rooms by the one outdoor unit. This type of air conditioner referred to as a multiple-type air conditioner.

The multiple-type air conditioner includes a refrigerant circuit formed of a compressor, a four-way valve, an outdoor heat exchanger, a motor-operated valve, indoor heat exchangers and an accumulator. The indoor unit includes the indoor heat exchanger and a room fan. The room fan takes indoor air into the indoor unit, and brings the air into contact with the indoor heat exchanger. The indoor heat exchanger condenses or evaporates the refrigerant flowing through the indoor heat exchanger, and thereby heats or cools the taken-in air for supplying hot or cool air into the room. The outdoor unit includes mechanical devices such as a compressor, a four-way valve and an accumulator as well as an outdoor heat exchanger and an outdoor fan. The compressor takes in and compresses the refrigerant to discharge pressurized hot refrigerant. The four-way valve is disposed on the outlet side of the compressor, and switches the flow of the refrigerant discharged from the compressor for switching an operation mode between cooling and heating. The outdoor fan takes an outdoor air, into the outdoor unit, and brings the air into contact with the outdoor heat exchanger. The outdoor heat exchanger transfers heat between the outdoor air and the refrigerant for evaporating or condensing the refrigerant. The motor-operated valve lowers the pressure of the pressurized refrigerant so that the refrigerant can evaporate easily. The accumulator is disposed on the intake side of the compressor for preventing mixing of liquid refrigerant and gaseous refrigerant.

The compressor is usually driven by an AC motor. The AC motor is connected to an inverter circuit, and is driven by an AC voltage supplied from the inverter circuit. An input of the inverter circuit is connected to an AC/DC converter circuit, which is connected to a commercial power supply. The AC/DC converter circuit converts the AC voltage supplied from the commercial power supply into a DC voltage, and applies it to the inverter circuit. The inverter circuit converts the DC voltage into an AC voltage of a predetermined frequency, by which the AC motor is driven. The AC motor drives the compressor. By increasing or decreasing the frequency of the AC voltage supplied from the inverter circuit, the rotation speed of the compressor is increased or decreased to change the degree of heating or cooling the indoor air. In this manner, the room temperature is adjusted during the cooling or heating.

EP-A-0 866 284 discloses a multiple-type air conditioner comprising an outdoor unit; a plurality of indoor units connected to the outdoor unit; a refrigerant circuit having indoor heat exchangers arranged in the indoor units, a compressor arranged in the outdoor unit, a four-way valve, an outdoor heat exchanger and a motor-operated valve; outdoor and indoor fans for producing air flows through the outdoor heat exchanger and indoor heat exchangers; and control means connected to the refrigerant circuit for controlling a flow of refrigerant in the refrigerant circuit to control a room temperature; and further comprising:
a DC power supply circuit converting an AC voltage supplied from a commercial power supply, and outputting a variable DC voltage; and a first inverter circuit converting the DC voltage supplied from said DC power supply circuit into pulse voltage.

However, the conventional multiple-type air conditioner described above suffers from the following disadvantage.

The voltage of the commercial power supply may vary depending on the season and time zone. In a building, the voltage of the commercial power supply may vary depending on whether another electric device is used or not. According to the AC/DC converter circuit and inverter circuit of the multiple-type air conditioner in the prior art, when the voltage of the commercial power supply varies, the DC voltage supplied from the AC/DC converter circuit varies, and the AC voltage supplied from the inverter circuit varies. In this case, it is difficult to control accurately the rotation speed of the AC motor so that accurate control of the room temperature is difficult. Since different nominal voltages are used in various countries, it is necessary to develop different devices dedicated to various countries. For this reason, it is impossible to achieve commonality of parts, which impedes cost reduction.

Since the single outdoor unit operates to cool or heat simultaneously two or more rooms, electric parts arranged in the outdoor unit must be selected from those allowing flow of large currents. However, commercially available electric parts, which allow flow of the large currents, are extremely small in quantity, and are relatively expensive.

In connection with an electrical work for installation, thick wires are used so that many working steps and expensive parts are required. For these reasons, the product cost of the multiple-type air conditioner is high. Also, an electric power cost is high.

An object of the invention to provide a multiple-type air conditioner, which can achieve commonality of parts regardless of the difference in nominal voltage between the countries.

Another object of the invention is to allow accurate control of a room temperature even when a voltage of a commercial power supply varies.

Still another object of the invention is to provide a multiple-type air conditioner, which can improve an air-conditioning efficiency, can reduce a required energy and a product cost, and can achieve an easy installation work.

### SUMMARY OF THE INVENTION

According to the invention, a multiple-type air conditioner can be used for different nominal voltages of various countries without changing parts. Also, according to the invention, a room temperature can be controlled accurately even when a voltage of a commercial power supply varies. Further, according to the invention, a required energy is reduced by allowing control of the room temperature with reduced power consumption (i.e., by improving an air-conditioning efficiency).

Further, according to the invention, a product cost of an air conditioner is reduced by achieving commonality of parts regardless of difference in nominal voltage between the countries, and by reducing a required energy of the air conditioner, which can be achieved by reducing sizes of the parts. By reducing the required energy of the air conditioner, wires of reduced diameters can be used in wiring of the air conditioner, which facilitates an installation work.

According to a first aspect of the invention, a multiple-type air conditioner having a plurality of indoor units connected to one outdoor unit, includes the outdoor unit, the plurality of indoor units connected to the outdoor unit, a refrigerant circuit, indoor and outdoor fans, control means, a DC power supply circuit, first to third inverter circuits, and first to third motors. The refrigerant circuit has indoor heat exchangers arranged in the indoor units, a compressor arranged in the outdoor unit, a four-way valve, an outdoor heat exchanger and a motor-operated valve. The indoor and outdoor fans produce air flows through the outdoor and indoor heat exchangers. The control means is connected to the refrigerant circuit for controlling a flow of refrigerant in the refrigerant circuit to control a room temperature. The DC power supply circuit converts an AC voltage supplied from a commercial power supply, and outputs a DC voltage. The first, second and third inverter circuits convert the DC voltage supplied from the DC power supply circuit into pulse voltages. The first motor is a DC motor for driving the compressor, and is driven by the first inverter circuit. The second and third motors are DC motors for driving the outdoor fans, and are driven by the second and third inverter circuits, respectively.

According to the first aspect of the invention, the rotation speed of the first motor (compressor) is controlled by increasing or decreasing an on time of the pulse voltage supplied from the first inverter circuit. The rotation speeds of the second and third motors (outdoor fans) are controlled by increasing or decreasing on times of the pulse voltages supplied from the second and third inverter circuits.

According to the air conditioner of the first aspect of the invention, even when the voltage supplied to the air conditioner varies, the compressor (first motor) and the outdoor fans (second and third motors) can be accurately controlled by controlling the on times of the pulse voltages of the first, second and third inverter circuits.

Therefore, change in parts is not required in the air conditioners for various countries of different nominal voltages, and common parts can be used in the air conditioners for these countries. Even if the output voltage of the DC power supply varies due to variations in voltage of the commercial power supply, the air conditioner can accurately control the room temperature.

According to a second aspect of the invention, the air conditioner of the first aspect further has such a feature that the DC power supply circuit includes a rectifier circuit, a capacitor and an active filter. The rectifier circuit is connected to the commercial power supply, and rectifies an input from the commercial power supply. The capacitor outputs a DC voltage. The active filer is connected between the rectifier circuit and the capacitor for maintaining the voltage of the capacitor at a set value, and shaping waveforms of an input current and an input voltage supplied from the commercial power supply into similar forms.

According to the DC power supply circuit of the second aspect, even when the nominal voltage changes in accordance with change of the country, the active filter can increase or decrease the current supplied from the rectifier circuit to the capacitor so that the output voltage of the DC power supply circuit is maintained at a set value. According to the DC power supply circuit of the second aspect, when the voltage of the commercial power supply varies, the active filter increases or decreases the current supplied from the rectifier circuit to the capacitor so that the output voltage of the DC power supply circuit is maintained at the set value. According to the DC power supply circuit of the second aspect, even when a load of the DC power supply circuit changes, the active filter increases or decreases the current supplied from the rectifier circuit to the capacitor so that the output voltage of the DC power supply circuit is maintained at the set value.

According to the DC power supply circuit of the second aspect, even when the voltage of the commercial power supply lowers, the output voltage of the DC power supply circuit is maintained at the set value, and the first to third motors are driven by high voltages. This improves operation efficiencies of the first to third motors. Since the active filter controls the input current and the input voltage of the air conditioner to have similar waveforms, the power-factor of input from the commercial power supply can be improved. Since the operation efficiencies of the first to third motors as well as the input power-factor are improved, the air conditioner can control the room temperature with further reduced power consumption, and the required energy can be reduced. Further, the achievement of commonality of the parts and the reduction in size of the parts owing to the reduction in required energy can reduce a product cost. Further, owing to the reduction in required energy, it is possible to reduce the size of wires used in wiring of the air conditioner. This facilitates an installation work.

According to a third aspect, the air conditioner of the first or second aspect further has such a feature that the control means controls a rotation speed of the first motor and a degree of opening of the motor-operated valve based on an outlet temperature and an intake pressure of the compressor in a cooling operation, and controls the rotation speed of the first motor and the degree of opening of the motor-operated valve based on an output temperature and a condensation temperature of the compressor in a heating operation.

According to the air conditioner of the third aspect, the rotation speed of the compressor (first motor) and the opening degree of the motor-operated valve are not controlled independently of each other. In the cooling operation, the rotation speed of the compressor (first motor) and the opening degree of the motor-operated valve are simultaneously controlled based on both the output temperature and intake pressure of the compressor. In the heating operation, the rotation speed of the first motor and the opening degree of the motor-operated valve are controlled based on the outlet temperature and the condensation temperature of the compressor.

According to the air conditioner of the third aspect, it is possible to reduce a thermal loss, which may occur due to imbalance between the rotation speed of the compressor (first motor) and the opening degree of the motor-operated valve. By reducing the thermal loss, the required energy can be further reduced.

According to a fourth aspect of the invention, the air conditioner of any one of the first to third aspects further has such a feature that the outdoor fan includes an impeller or propeller fan having thick hollow blades.

The thick hollow blades of the impeller of the outdoor fan can suppress burble of an air flow independently of variations in intake angle of the air, and therefore can achieve a better blowing performance than thin blades. Accordingly, the outdoor heat exchanger can efficiently exchange the heat with an outdoor air, and thus can further reduce the required energy.

### BRIEF DESCRIPTION OF THE DRAWINGS

Fig. 1 schematically shows a structure of an air conditioner employing an embodiment of the invention;
Fig. 2 is a block diagram showing a structure of the air conditioner employing the embodiment of the invention;
Fig. 3 shows a structure of a refrigerant circuit of the air conditioner employing the embodiment of the invention;
Fig. 4 shows a structure of drive means of the air conditioner employing the embodiment of the invention;
Fig. 5 is a perspective view of an outdoor fan of the air conditioner employing the embodiment of the invention;
Fig. 6 is a plan showing an outlet side of the outdoor fan of the air conditioner employing the embodiment of the invention;
Fig. 7 is a cross section of a blade of the outdoor fan of the air conditioner employing the embodiment of the invention;
Fig. 8 is a control block diagram of the air conditioner employing the embodiment of the invention;
Fig. 9 is a flowchart of control of the air conditioner employing the embodiment of the invention;
Fig. 10 is a control block diagram of a DC power supply circuit of the air conditioner employing the embodiment of the invention;
Fig. 11 shows control of the DC power supply circuit of the air conditioner employing the embodiment of the invention;
Fig. 12 is a block diagram showing MIO control in a heating operation; and
Fig. 13 is a block diagram showing the MIO control in a cooling operation.

### DESCRIPTION OF THE PREFERRED EMBODIMENTS

### [Embodiment]

### (Whole Structure)

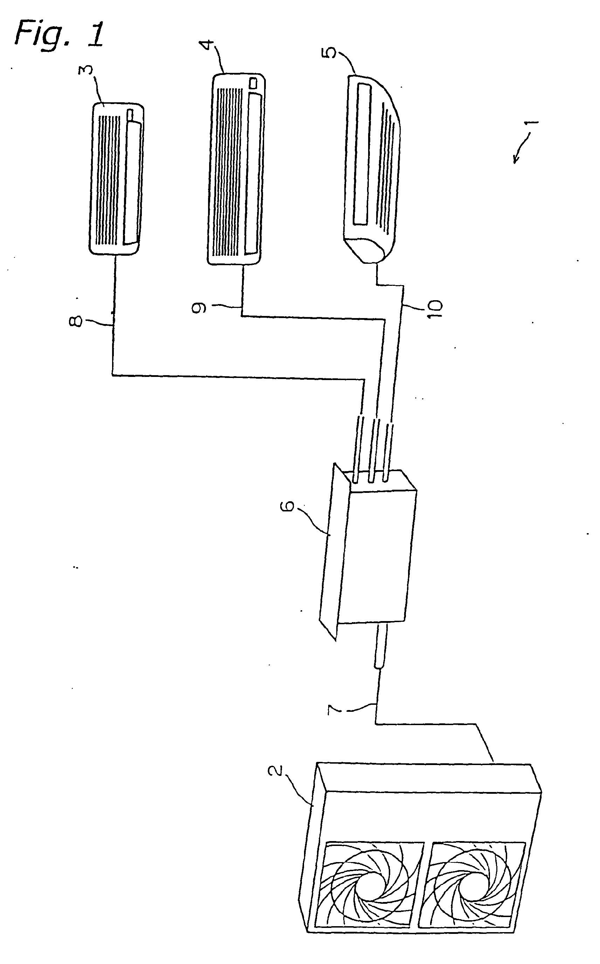

Fig. 1 shows a whole structure of a multiple-type air conditioner employing an embodiment of the invention.

An air conditioner 1 includes an outdoor unit 2, pipes 7, 8, 9 and 10, and indoor units 3, 4 and 5. The outdoor unit 2 includes a compressor, a four-way valve, an outdoor heat exchanger, a motor-operated valve, an accumulator, outdoor fans and others. The pipe 7 connects the outdoor unit 2 to a dividing unit 6, and refrigerant passes therethrough. The dividing unit 6 distributes the refrigerant supplied form the outdoor unit 2 to the pipes 8, 9 and 10. The pipes 8, 9 and 10 supply the refrigerant coming from the dividing unit 6 to the indoor units 3, 4 and 5, respectively. The indoor units 3, 4 and 5 cool or heat the air in the room with the refrigerant supplied from the pipes 8, 9 and 10. In this air conditioner 1, the outdoor unit 2, the dividing unit 6 and the indoor units 3, 4 and 5 form a circular refrigerant circuit. For example, the refrigerant flows through the outdoor unit 2, dividing unit 6, indoor units 3, 4 and 5, the dividing unit 6 and the outdoor unit 2 for cooling or heating the room airs.

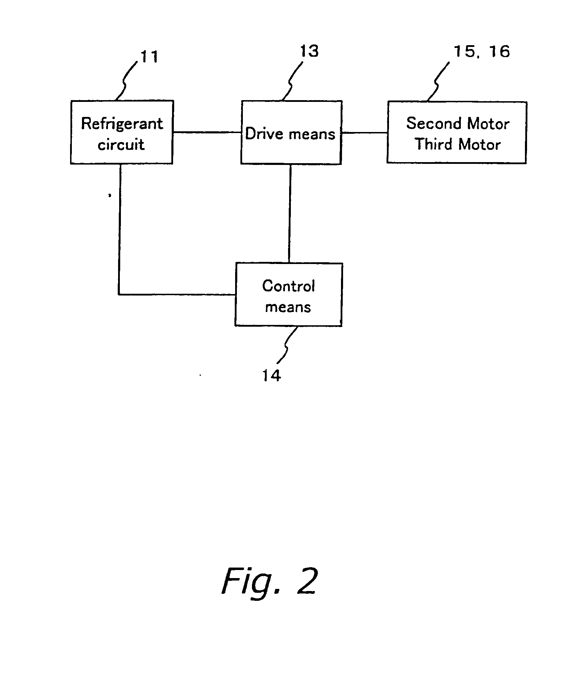

Fig. 2 is a block diagram showing a structure of the air conditioner 1. The air conditioner 1 includes a refrigerant circuit 11, a second motor 15, a third motor 16, drive means 13 and control means 14. The refrigerant circuit 11 is formed of a compressor arranged in the outdoor unit 2, the four-way valve, the outdoor heat exchanger, the motor-operated valve, the accumulator and indoor heat exchangers arranged in the indoor units 3, 4 and 5, which are connected to form a circular path. The second and third motors 15 and 16 are arranged in the outdoor unit 2, and drive the outdoor fans for producing an air flow through the outdoor heat exchanger. The drive means 13 drives the refrigerant circuit 11 and the second and third motors 15 and 16. The control means 14 is connected to the refrigerant circuit 11 and the drive means 13 for selecting the cooling and heating modes, and controlling the room temperature.

### (Structure of Refrigerant Circuit)

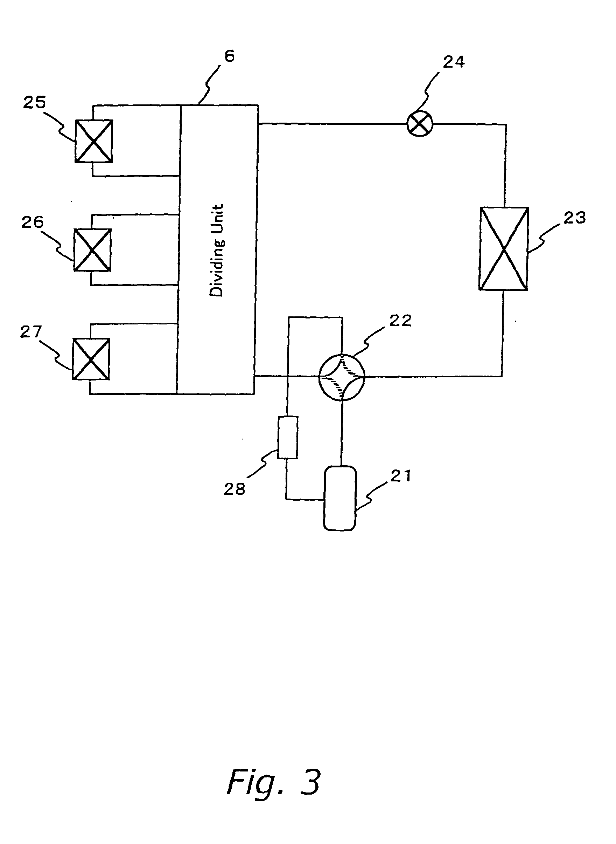

A structure of the refrigerant circuit 11 will now be described with reference to Fig. 3. The refrigerant circuit 11 includes a compressor 21, a four-way valve 22 connected to an outlet of the compressor 21, an outdoor heat exchanger 23 connected to the four-way valve 22, a motor-operated valve 24 connected to the outdoor heat exchanger 23, the dividing unit 6 connected to the four-way valve 22 and the motor-operated valve 24, a plurality of indoor heat exchangers 25, 26 and 27 connected to the dividing unit 6, and an accumulator 28 connected to the intake side of the compressor 21 for preventing mixing of liquid refrigerant and gaseous refrigerant.

The compressor 21, four-way valve 22, outdoor heat exchanger 23, motor-operated valve 24 and accumulator 28 are arranged in the outdoor unit 2. The indoor heat exchangers 25, 26 and 27 are arranged in the different indoor units 3, 4 and 5, respectively.

For the cooling operation, the refrigerant circuit 11 operates as follows. The four-way valve 22 is in the position depicted by solid line, the opening degree of the motor-operated valve 24 is reduced to a predetermined degree, and the compressor 21 operates. Pressurized refrigerant supplied from the compressor 21 is condensed in the outdoor heat exchanger 23, and then is depressurized by the motor-operated valve 24. The depressurized refrigerant at a low pressure evaporates in the indoor heat exchangers 25, 26 and 27, and then returns to the compressor 21 through the four-way valve 22 and the accumulator 28. When the refrigerant evaporates in the indoor heat exchangers 25, 26 and 27, the refrigerant takes in heat from the indoor air. The indoor air, from which the heat is removed, acts as cooling air.

For the heating operation, the four-way valve 22 is in the position depicted by dotted line, the opening degree of the motor-operated valve 24 is reduced, and the compressor 21 operates. Pressurized refrigerant supplied from the compressor 21 is condensed in the indoor heat exchangers 25, 26 and 27, and then is depressurized by the motor-operated valve 24. The depressurized refrigerant at a low pressure evaporates in the outdoor heat exchanger 23, and then returns to the outlet side of the compressor 21 through the four-way valve 22 and the accumulator 28. When the refrigerant is condensed in the indoor heat exchangers 25, 26 and 27, the refrigerant releases the heat into the indoor air, and the indoor air absorbing the heat acts as heating air.

### (Structure of Drive Means)

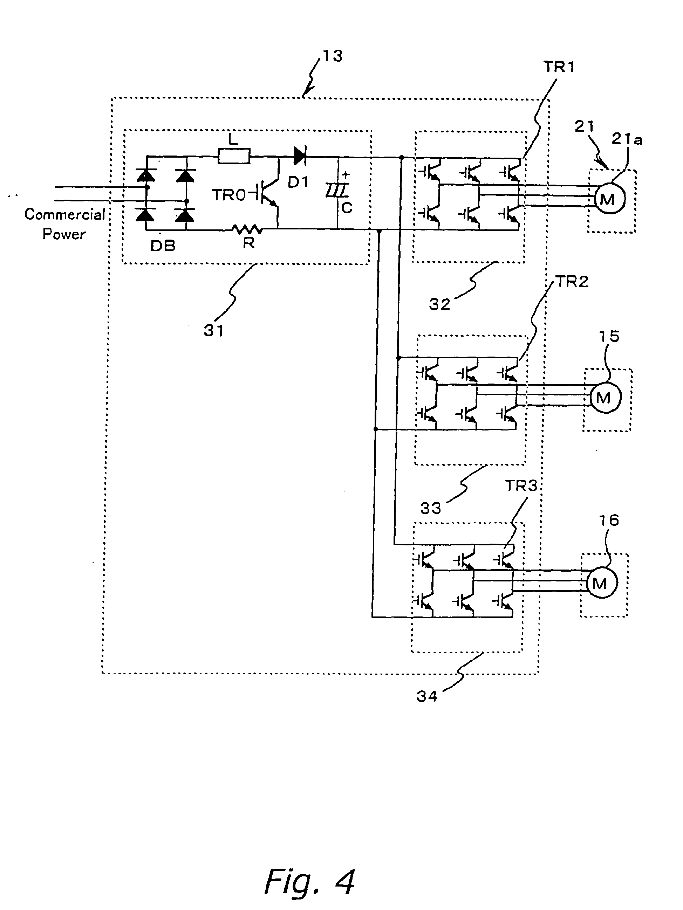

A structure of the drive means 13 will now be described with reference to Fig. 4. The drive means 13 includes a DC power supply circuit 31 as well as first, second and third inverter circuits 32, 33 and 34. The first inverter circuit 32 drives the compressor 21 (first motor 21a) in the refrigerant circuit 11. The second and third inverter circuits 33 and 34 drive outdoor fans (second and third motors 15 and 16) arranged in the outdoor unit 2.

The DC power supply circuit 31 coverts an input (AC voltage) received from a commercial power supply into a DC voltage. The DC power supply circuit 31 includes a rectifier circuit DB, a reactor L, a switching element TR0, a diode D1 and a capacitor C. The rectifier circuit DB is formed of a diode bridge including two diode sets, which are connected in parallel and each include two diodes connected in series. A connection between the diodes in each set is connected to an input receiving the commercial power supply. The rectifier circuit DB performs full-wave rectification on the AC voltage supplied from the commercial power supply. One end of the reactor L is connected to a high potential side of the output of the rectifier circuit, and the other end is connected to a high potential side of the switching element TR0. The reactor L has a function of a current supply or source for supplying a current to the capacitor C. One end of the switching element TR0 is connected the end of the reactor L and an anode side of the diode D1, and the other end is connected to a lower potential side. The switching element TR0 performs switching on the current subjected to the full-wave rectification by the rectifier circuit DB based on the signal supplied from the control means 14, and thereby controls the current supplied to the capacitor C. The diode D1 prevents return of the current from the capacitor C to the switching element TR0 when the switching element TR0 is on. One end of the capacitor C is connected to the cathode side of the diode D1, and the other end is connected to the lower potential side of the switching element TR0 so that the capacitor C can flatten the rectified voltage subjected to the full-wave rectification by the rectifier circuit DB. Usually, the capacitor C is formed of an aluminum electrolytic capacitor having a large capacity.

The first inverter circuit 32 is formed of a bridge circuit including three element sets connected in parallel and each including switching elements TR1 connected in series. The first inverter circuit 32 performs the switching by the switching elements TR1 based on a signal sent from the control means 14, and thereby converts the DC voltage supplied from the DC power supply circuit 31 into the pulse voltage. The pulse voltage supplied from the first inverter circuit 32 is supplied to the first motor 21a. The compressor 21 (first motor 21a) is driven by a pulse voltage supplied from the first inverter circuit 32. If the on time of the pulse voltage supplied from the first inverter circuit 32 increases, the current flowing through the first motor 21a also increases. Therefore, the rotation speed of the compressor 21 (first motor 21a) is controlled by controlling the on time of the pulse voltage supplied from the first inverter circuit 32 in accordance with the signal supplied from the control means 14.

Each of the second and third inverter circuits 33 and 34 is formed of a bridge circuit including three element sets connected in parallel and each including switching elements TR2 or TR3 connected in series. Each of the second and third inverter circuits 33 and 34 operates to perform switching by the switching elements TR2 or TR3 based on the signal sent from the control means 14, and thereby converts the DC voltage supplied from the DC power supply circuit 31 into the pulse voltage. The pulse voltage supplied from each of the second and third inverter circuits 33 and 34 is supplied to the second or third motor 15 or 16. The outdoor fans (second and third motors) are driven by pulse voltages supplied from the second and third inverter circuits 33 and 34, respectively. If the on time of the pulse voltage supplied from each of the second and third inverter circuits 33 and 34 increases, the current flowing through the second or third motor 15 or 16 also increases. Therefore, the rotation speed of the outdoor fan (second or third motor) can be controlled by controlling the on time of the pulse voltage supplied from the corresponding second or third inverter circuits 33 or 34 in accordance with the signal supplied from the control means 14.

### (Compressor Motor and Fan Motor)

As already described, the first motor 21a is a DC motor for driving the compressor 21, and is driven by the pulse voltage supplied from the first inverter circuit 32. The rotation speed of the first motor 21a is controlled by controlling the on time of the pulse voltage.

As already described, the second and third motors 15 and 16 are DC motors for driving the outdoor fans, and are driven by the pulse voltages supplied from the second and third inverter circuits 33 and 34, respectively. The rotation speeds of the second and third motors 15 and 16 are controlled by controlling the on times of the pulse voltages.

According to the DC motors described above, the compressor 21 (first motor 21a) and the outdoor fans (second and third motors 15 and 16) can be accurately controlled by controlling the on times of the pulse voltages of the first, second and third inverter circuits 32, 33 and 34, respectively, even when the nominal voltage changes depending on the nation. For various countries, therefore, the multiple-type air conditioner can be used without changing the design. Thus, the multiple-type air conditioners formed of common parts can be produced for various countries. Further, according to the DC motors described above, even when the output voltage of the DC power supply circuit 31 varies in accordance with variations in voltage of the commercial power supply, the room temperature control can be performed accurately by controlling the on time of the inverter circuit.

### (Outdoor Fan)

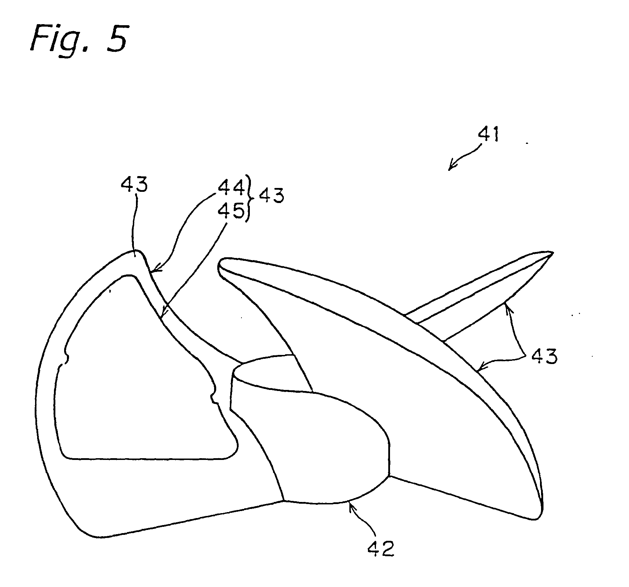

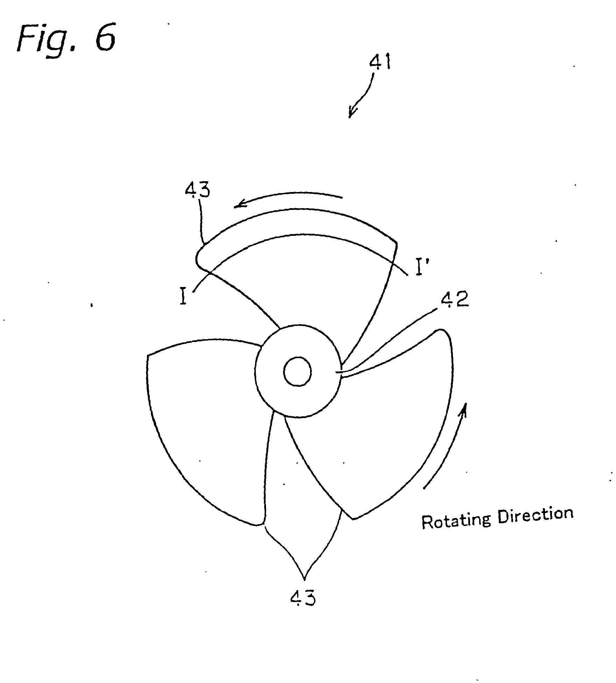

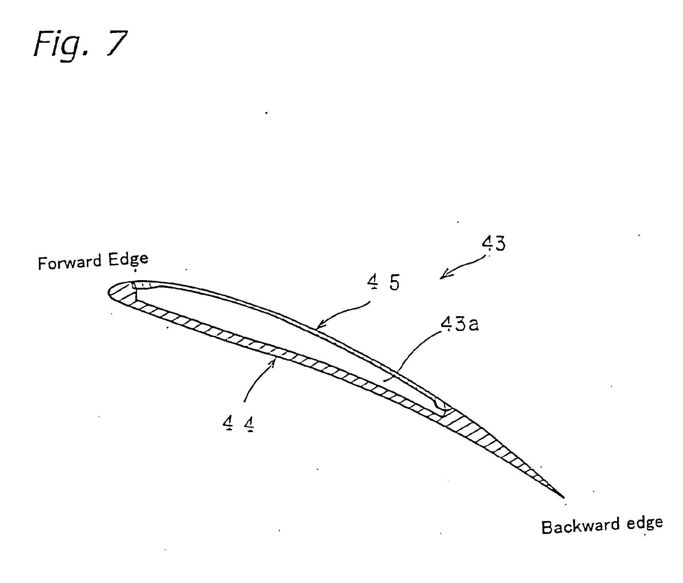

A structure of an outdoor fan 41 arranged in the outdoor unit 2 will now be described with reference to Figs. 5 - 7. Fig. 5 is a perspective view of the outdoor fan 41, Fig. 6 is a plan of the outdoor fan 41, and Fig. 7 is a cross section of a blade of the outdoor fan 41 taken along line I - I' in Fig. 6. The outdoor fan 41 is formed of a cylindrical hub 42 and three blades 43, which are joined to the outer peripheral surface of the hub 42 at a predetermined inclination angle with respect to a blowing direction. The peripheral portion of the hub 42 is provided with a groove (not shown) or the like for unrotatable engagement with a rotation shaft of the third motor 16. Although the outdoor fan 41 has the three blades, it may have four or five blades.

The blade 43 is formed of a blade body 44 and a cover or lid 45 as shown in Fig. 5. The blade body 44 and the cover 45 are joined together, e.g., by ultrasonic joining. As shown in Fig. 7, a hollow 43a is formed between the body 44 and the cover 45. As shown in Fig. 6, the blade 43 is a so-called swept-forward wing and, for improving an aerodynamic performance, has such a form that a forward edge in the rotating direction moves forward in the rotating direction as the position moves radially outward. As shown in Fig. 7, the blade 43 has a hollow structure, and is thick (an airfoil form) and light. Since the blade 43 is thick, the front edge has a round section, and can reduce a degree of burble of an air flowing in various directions toward the blade 43, and particularly a degree of burble at the front edge. According to the outdoor fan 41 described above, the burble of the air flow can be suppressed independently of variation in the inflow angle of the air, the blowing performance can be higher than that of a fan employing thin blades. According to the outdoor fan 41, therefore, the outdoor heat exchanger 23 can efficiently exchange the heat with an outdoor air so that the room temperature can be controlled with further reduced power consumption, and the required energy of the air conditioner can be reduced.

Employment of the DC motors can achieve the commonality of parts, and can reduce the sizes of parts owing to reduction in required energy so that the product cost of the air conditioner can be reduced. Owing to the reduction in energy of the air conditioner, it is possible to reduce diameters of wires used in wiring of the air conditioner, which facilitates the installation work.

### (Structure of Control Means)

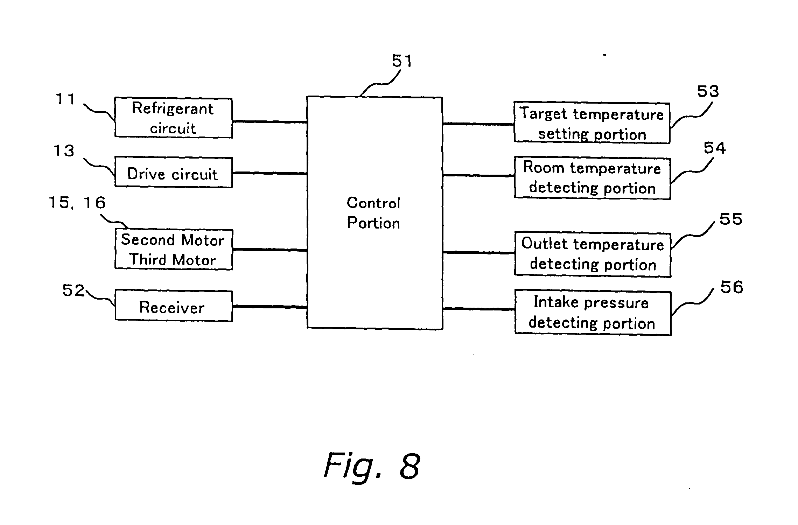

The control means 14 is formed of a control portion 51, which is a microprocessor, as shown in Fig. 8. The control portion 51 is connected to the refrigerant circuit 11 and the drive means 13. The control portion 51 is connected to a receiver 52 for receiving an instruction sent from a remote control unit, and a target temperature setting portion 53 for setting a target temperature in accordance with the instruction received by the receiver 52. The target temperature setting portion 53 can be formed of a predetermined region in a memory connected to the control portion 51. The control portion 51 is connected to a room temperature detecting portion 54, which is formed of a temperature sensor detecting the room temperature. The control portion 51 is also connected to an outlet temperature detecting portion 55, which detects a temperature (outlet temperature) of the refrigerant on the outlet side of the compressor 21, and an intake pressure detecting portion 56, which detects a pressure (intake pressure) of the refrigerant on the intake side of the compressor 21.

### (Operation Control)

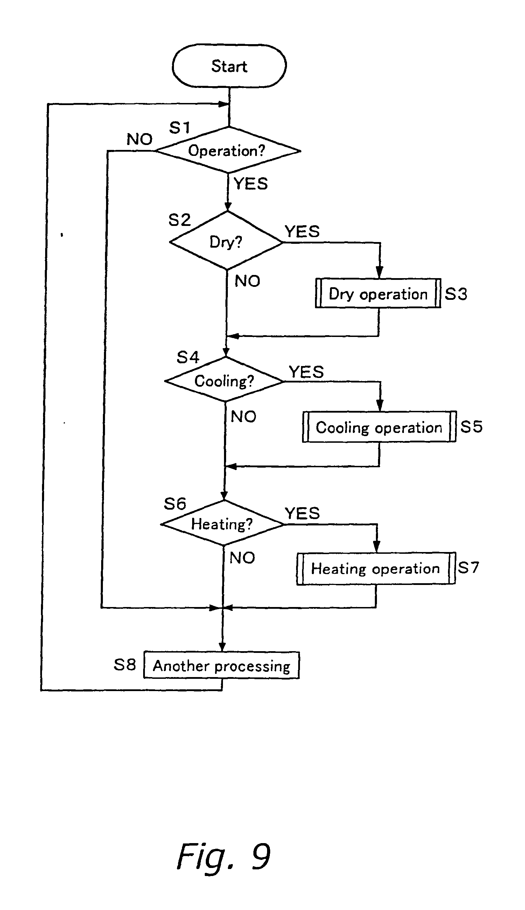

Operation control in this embodiment will now be described below with reference to a flowchart of Fig. 9.

In a step S1, it is determined whether a signal for operation instruction is received from the remote control unit or not. If the receiver 52 receives the instruction signal from the remote control unit, a target temperature included in the instruction signal or a predetermined target temperature of a standard value is stored in the temperature setting portion 53, and the operation moves to a step S2.

In the step S2, it is determined whether the instructing signal instructs dry operation or not. If the instructing signal instructs the dry operation, the operation moves to a step S3. In the step S3, the normal dry operation is executed.

If the instructing signal does not instruct the dry operation in the step S2, the operation moves from the step S2 to the step S4. In the step S4, it is determined whether the instructing signal instructs the cooling operation of not. If the instructing signal instructs the cooling operation, the operation moves to a step S5. In the step S5, the normal cooling operation is executed.

If the instructing signal does not instruct the cooling operation in the step S4, the operation moves from the step S4 to a step S6. In the step S6, it is determined whether the instructing signal instructs the heating operation or not. When the instructing signal instructs the heating operation, the operation moves to a step S7. In the step S7, the normal heating operation is executed.

If the instructing signal does not instruct the heating operation in the step S6, the operation moves from the step S6 to a step S8. In the step S8, another processing is executed, and the operation returns to the step S1.

### (Control of DC Power Supply Circuit)

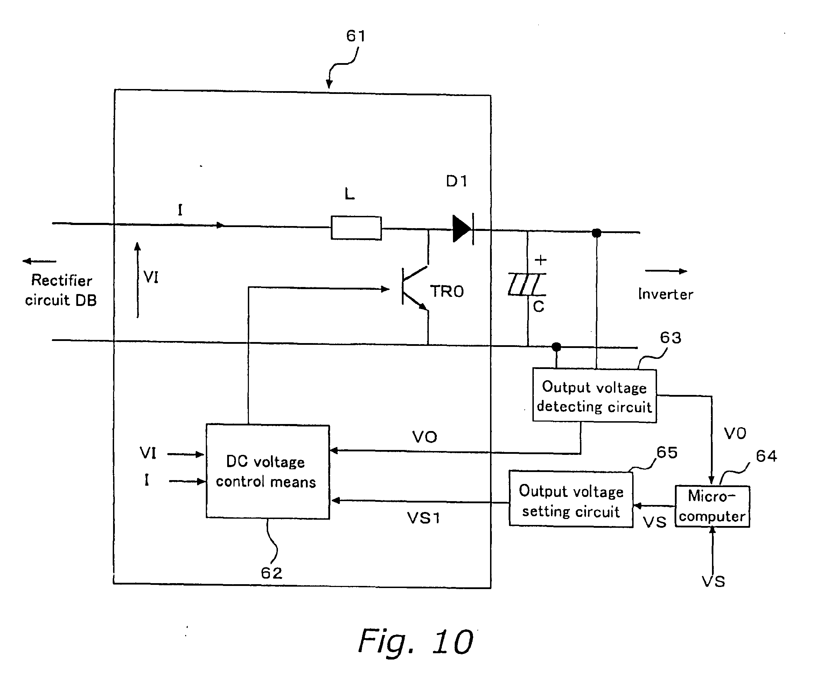

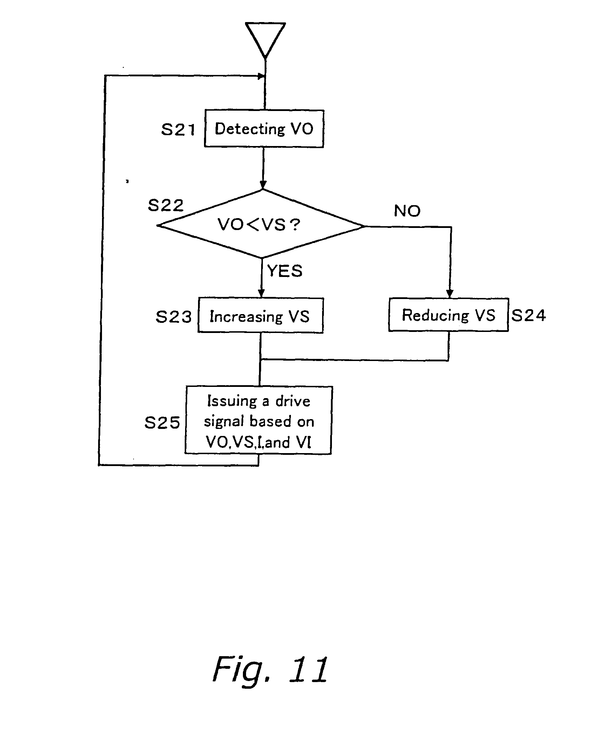

Control of the DC power supply circuit 31 will now be described with reference to Figs. 10 and 11. In Figs. 10 and 11, I and VI indicate an input current and an input voltage of an active filter 61, respectively. VO indicates a voltage, which is applied across the opposite ends of the capacitor C, and is the same as an output voltage of the DC power supply circuit 31. The output voltage VO of the DC power supply circuit 31 is controlled to be equal to a set voltage VS by the active filter 61, an output voltage detecting circuit 63, a microcomputer 64 and an output voltage setting circuit 65.

The active filter 61 is formed of the reactor L, switching element TR0 and diode D1, which are already described, as well as a DC voltage control means 62. The active filter 61 controls the current supplied to the capacitor C by switching the switching element TR0 based on a drive signal sent from the DC voltage control means 62.

The output voltage detecting circuit 63 detects the output voltage VO of the DC power supply circuit 31. The microcomputer 64 compares the set voltage VS with the output voltage VO, increases or decreases the set voltage VS, and calculates a new set voltage VS1.

The DC voltage control means 62 outputs the drive signal to the switching element TR0 based on the output voltage VO, new set voltage VS1, input current I and input voltage VI so that the output voltage VO may become equal to the set voltage VS1, and that the input current I and the input voltage VI may have similar waveforms. The output voltage setting circuit 65 converts the new set voltage VS1 to a voltage, which can be applied to the DC voltage control means 62.

Control of the DC power supply circuit 31 will now be described with reference to a flowchart of Fig. 11.

In a step S21, output voltage detecting circuit 63 detects the output voltage VO, and outputs it to the microcomputer 64 and the DC voltage control means 62.

In a step S22, the microcomputer 64 compares the output voltage VO with the set voltage VS. If the output voltage VO is larger than the set voltage VS, the operation moves to a step S24. In the step S24, the new set voltage VS1 smaller than the set voltage VS is output for reducing the output voltage VO, and the operation moves to a step S25.

If the output voltage VO is smaller than the set voltage VS in the step S22, the operation moves from the step S22 to a step S23. In the step S23, the new set voltage VS1 larger than the set voltage VS is output for increasing the output voltage VO, and the operation moves to a step S25.

In a step S25, comparisons are made between the output voltage VO and the new set voltage VS1 as well as between the waveforms of the input current I and input voltage VI, and the drive signal is issued to the switching element TR0 so that the output voltage VO may become equal to the set voltage VS1, and the input current I and the input voltage VI may have similar waveforms.

According to the DC power supply circuit 31, even when the nominal power supply changes depending on the country, the active filter increases or decreases the current supplied to the capacitor so that the output voltage VO of the DC power supply circuit 31 can be maintained at the set value VS.

According to the DC power supply circuit 31, even when the voltage of the commercial power supply varies, the active filter 61 increases or decreases the current supplied to the capacitor C so that the output voltage VO of the DC power supply circuit 31 can be maintained at the set value VS.

According to the DC power supply circuit 31, even when the load on the DC power supply circuit 31 varies, the active filter 61 increases or decreases the current supplied to the capacitor C so that the output of the DC power supply circuit 31 can be maintained at the set value VS.

According to the DC power supply circuit 31, therefore, even when the voltage of the commercial power supply lowers, it is possible to prevent lowering of the output voltage VO of the DC power supply circuit 31, and the first to third motors can be driven with high voltages. This improves the operation efficiencies of the first to third motors. Further, the active filter 61 performs the control so that the input current I and the voltage V may have similar waveforms. Therefore, the input power-factor of the commercial power supply can be improved. Owing to the improvement of the operation efficiencies of the first to third motors and the improvement of the input power-factor, the air conditioner can control the room temperature with further reduced power consumption, and the required energy of the air conditioner can be reduced. Sizes of the parts can be reduced owing to the reduction in required energy of the air conditioner. Also, owing to the reduction in required energy of the air conditioner, it is possible to reduce diameters of wires used in the wiring of the air conditioner.

### (Method of Controlling Compressor and Motor-Operated Valve)

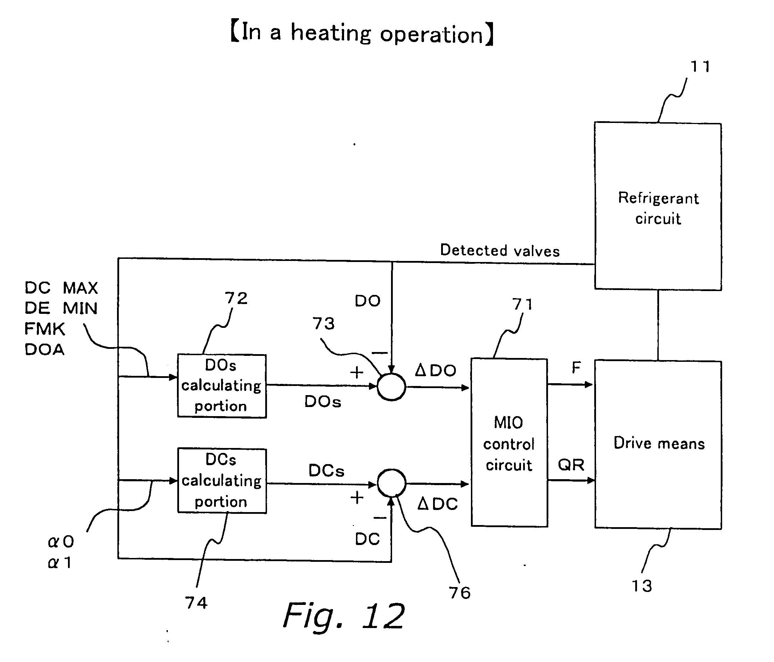

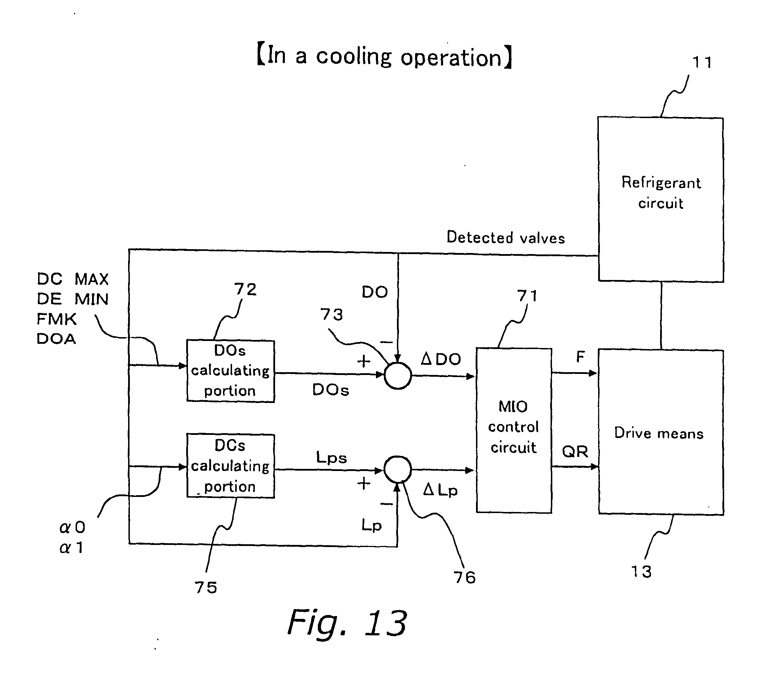

Description will now be given on a method of controlling a rotation speed F of the compressor 21 and an opening degree QR of the motor-operated valve 24 with reference to control block diagrams of Figs. 12 and 13. Fig. 12 shows the control in the heating operation, and Fig. 13 shows the control in the cooling operation. The control of the rotation speed F and the opening degree QR is performed by a MIO (Multi-Input and Output) control circuit 71, a DOs calculating portion 72, an adding portion 73, a DCs calculating portion 74 (or Lps calculating portion 75), and an adding portion 76. These form a part of the control means 14.

The MIO control circuit 71 is connected to the adding portions 73 and 76 as well as the drive means 13, and instructs the rotation speed F and the opening degree QR to the drive means 13. The DOs calculating portion 72 is connected to the refrigerant circuit 11 and the adding portion 73 for calculating an outlet temperature set value DOs based on a condensation temperature DCMAX, an evaporation temperature DEMIN, a target rotation speed FMK of the compressor 21, an external intake temperature DOA and others. The condensation temperature DCMAX is the highest temperature among those of the indoor heat exchangers 25, 26 and 27 in the heating operation, and is the temperature of the outdoor heat exchanger 23 in the cooling operation. The evaporation temperature DEMIN is the temperature of the outdoor heat exchanger 23 in the heating operation, and is the lowest temperature among those of the indoor heat exchangers 25, 26 and 27 in the cooling operation. The DCs calculating portion 74 and the Lps calculating portion 75 calculate a condensation temperature set value DCs and an intake pressure set value Lps based on a room temperature deviation delta-0, a last room temperature deviation delta-1 and others, respectively. An intake pressure Lp is a pressure of the refrigerant on the intake side of the compressor 21. The calculating portion 72 calculates a deviation delta-D0 between the outlet temperature set value DOs and the detected outlet temperature value DO, and the adding portion 76 calculates a deviation delta-DC between the condensation temperature set value DCs and the condensation temperature DC, or a deviation delta-Lp between the intake pressure set value Lps and the intake pressure Lp.

In the heating operation, the DOs calculating portion 72 and the DCs calculating portion 74 calculate the outlet temperature set value DOs and the condensation temperature set value DCs based on the detected values described above, respectively. Then, the adding portions 73 and 76 calculate the outlet temperature deviation delta-DO and the condensation temperature deviation delta-DC, and ally them to the MIO control circuit 71. The MIO control circuit 71 simultaneously calculates the rotation speed F and the opening degree QR based on the outlet temperature deviation delta-DO and the condensation temperature deviation delta-DC, and instructs them to the drive means 13.

In the cooling operation, the DOs calculating portion 72 and the Lps calculating portion 75 calculate the output temperature set value DOs and the intake pressure set value Lps based on the detected values described above, respectively. Then, the adding portions 73 and 76 calculate the outlet temperature deviation delta-DO and the intake pressure deviation delta-Lp, and apply them to the MIO control circuit 71. The MIO control circuit 71 simultaneously calculates the rotation speed F and the opening degree QR based on the outlet temperature deviation delta-DO and the intake pressure deviation delta-Lp, and instructs them to the drive means 13.

The above control can reduce a thermal loss, which may be caused by an imbalance between the rotation speed F of the compressor 21 and the opening degree QR of the motor-operated valve 24. Since the thermal loss can be reduced as described above, a required performance can be achieved with reduced power consumption so that the required energy of the air conditioner can be reduced. Owing to the reduction in required energy of the air conditioner, the sizes of parts of the air conditioner can be reduced, and the diameters of wires used in the wiring of the air conditioner can be reduced.

### [Other Embodiments]

In the embodiment already described, the three indoor units 3, 4 and 5 are connected to the one outdoor unit 2. However, two indoor units may be connected to one outdoor unit, or four or more indoor units may be connected to one outdoor unit.

### [Summary of the embodiment]

According to the multiple-type air conditioner of the embodiment described above, the DC motors are used as the first to third motors 15, 16 and 21a, respectively. Therefore, even when the input voltage of the air conditioner varies, the compressor 21 (first motor 21a) and the outdoor fans (second and third motors 15 and 16) can be accurately controlled by controlling the one times of the pulse voltages applied to the first to third motors 15, 16 and 21a. Accordingly, the air conditioner can accurately control the room temperature.

Therefore, the multiple-type air conditioners can be used in various countries without changing the design depending on the country. Thus, the commonality of parts of the air conditioner can be achieved.

Further, the air conditioner has the improved input power-factor, uses the DC motors of the improved operation efficiencies, and employs the outdoor fans having the blades of the hollow thick form. Therefore, the heat exchange efficiency in the outdoor heat exchanger 23 can be improved. Also, the thermal loss can be reduced by the MIO control of the rotation speed F of the compressor 21 and the opening degree QR of the powered valve. Thereby, the required energy of the air conditioner can be reduced.

Since the commonality of parts of the air conditioner is achieved and the sizes of parts are reduced by reducing the required energy of the air conditioner, it is possible to reduce the manufacturing cost of the air conditioner.

Owing to the reduction in required energy of the air conditioner, it is possible to reduce the diameters of the wires used in the wiring of the air conditioner. This facilitates the installation work.

### INDUSTRIALLY APPLICABILITY

According to the invention, the multiple-type air conditioners can be used without changing the design depending on the country. Thus, the commonality of parts of the air conditioner can be achieved. Also, according to the invention, even when the voltage of the commercial power supply varies, the multiple-type air conditioner can accurately control the room temperature. Further, according to the invention, the air conditioner can control the room temperature with reduced power consumption (and thus, at an improved air-conditioning efficiency) so that the required energy of the air conditioner can be reduced.

Furthermore, according to the invention, it is possible to achieve the commonality of parts of the air conditioner independently of the nominal voltage of the country, and the sizes of parts can be reduced by reducing the required energy of the air conditioner so that the manufacturing cost of the air conditioner can be reduced. Also, according to the invention, it is possible to reduce the diameters of wires used in the wiring of the air conditioner owing to the reduction in required energy of the air conditioner. This facilitates the installation work.

## Claims

1. A multiple-type air conditioner comprising an outdoor unit; a plurality of indoor units (3, 4, 5) connected to the outdoor unit; a refrigerant circuit having indoor heat exchangers (25, 26, 27) arranged in the indoor units, a compressor (21) arranged in the outdoor unit, a four-way valve (22), an outdoor heat exchanger (23) and a motor-operated valve (24); outdoor and indoor fans (41) for producing air flows through the outdoor heat exchanger (23) and indoor heat exchangers (25, 26, 27); and control means (14) connected to the refrigerant circuit (11) for controlling a flow of refrigerant in the refrigerant circuit (11) to control a room temperature; and further comprising:
a DC power supply circuit (31) converting an AC voltage supplied from a commercial power supply, and outputting a variable DC voltage;
first, second and third inverter circuits (32, 33, 34) converting the DC voltage supplied from said DC power supply circuit (31) into pulse voltages;
a first motor (21a) being a DC motor receiving the pulse voltage from said first inverter circuit (32) and driving said compressor (21); and
second and third motors (15, 16) being DC motors receiving the pulse voltages from said second and third inverter circuits (33) and (34), and driving said outdoor fans (41).

2. The air conditioner according to claim 1, wherein
said DC power supply circuit (31) includes:
a rectifier circuit (DB) connected to the commercial power supply for rectifying an input from the commercial power supply;
a capacitor (C) outputting a DC voltage;
an active filer (61) connected between said rectifier circuit (DB) and said capacitor (C) for maintaining the voltage of said capacitor (C) at a set value, and shaping waveforms of an input current (I) and an input voltage (VI) supplied from the commercial power supply into similar forms.

3. The air conditioner according to claim 1 or 2, wherein
said control means (14) controls a rotation speed (F) of the first motor (21a) and a degree (QR) of opening of the motor-operated valve (24) based on an outlet temperature (DO) and an intake pressure (Lp) of the compressor (21) in a cooling operation, and based on the output temperature (DO) and a condensation temperature (DC) of the compressor (21) in a heating operation.

4. The air conditioner according to claim 1, 2 or 3, wherein
said outdoor fan (41) is a propeller fan having thick hollow blades.

## Patentansprüche

1. Mehrzonenklimaanlage mit einer Außeneinheit, mehreren Inneneinheiten (3, 4, 5), die mit der Außeneinheit verbunden sind, einem Kühlkreislauf, der Innenwärmetauscher (25, 26, 27), die in den Inneneinheiten angeordnet sind, einen Kompressor (21), der in der Außeneinheit angeordnet ist, ein Vierwegeventil (22), einen Außenwärmetauscher (23) und ein motorbetriebenes Ventil (24) aufweist; Außen- und Innengebläse (41) zum Erzeugen von Luftströmen durch den Außenwärmetauscher (23) und den Innenwärmetauscher (25, 26, 27); und einer Regelungseinrichtung (14), die mit dem Kühlkreislauf (11) verbunden ist, um einen Kühlmittelfluss in dem Kühlkreislauf (11) zum Regeln einer Raumtemperatur zu regeln, und ferner mit:
einem Stromzufuhrschaltkreis von Gleichstrom (31), der eine Wechselspannung, die von einer kommerziellen Stromversorgung zugeführt wird, konvertiert und eine variable Gleichspannung ausgibt;
ersten, zweiten und dritten Inverterschaltkreisen (32, 33, 34), die den Gleichstrom, der von dem Stromzufuhrschaltkreis von Gleichstrom (31) zugeführt wird, in Impulsspannungen umwandelt;
einem ersten Motor (21a), der ein Gleichstrommotor ist, der die Impulsspannung von dem ersten Inverterschaltkreis (32) empfängt und den Kompressor (21) antreibt; und
zweiten und dritten Motoren (15, 16), die Gleichstrommotoren sind, welche die Impulsspannungen von den zweiten und dritten Inverterschaltkreisen (33) und (34) empfangen und die Außengebläse (41) antreiben.

2. Klimaanlage nach Anspruch 1, bei welcher
der Stromzufuhrschaltkreis von Gleichstrom (31) aufweist:
einen Gleichrichterschaltkreis (DB), der mit der kommerziellen Stromversorgung verbunden ist, um eine Eingabe von der kommerziellen Stromversorgung gleichzurichten;
einen Kondensator (C), um eine Gleichspannung auszugeben;
einen aktiven Filter (61), der zwischen den Gleichrichterschaltkreis (DB) und den Kondensator (C) geschaltet ist, um die Spannung des Kondensators (C) bei einem vorher festgelegten Wert zu halten und um die Wellenformen eines Eingabestroms (I) und einer Eingabespannung (VI), die von der kommerziellen Stromquelle zugeführt werden, in ähnliche Formen zu bringen.

3. Klimaanlage nach Anspruch 1 oder 2, bei der die Regelungseinrichtung (14) eine Drehgeschwindigkeit (F) des ersten Motors (21a) und einen Öffnungsgrad (QR) des motorbetriebenen Ventils (24) aufgrund einer Ausgabetemperatur (DO) und einem Eingangsdruck (Lp) des Kompressors (21) in einem Kühlbetrieb und aufgrund der Ausgabetemperatur (DO) und einer Kondensationstemperatur (DC) des Kompressors (21) in einem Heizbetrieb regelt.

4. Klimaanlage nach Anspruch 1, 2 oder 3, bei der
das Außengebläse (41) ein Ventilator mit dicken hohlen Propellerblättern ist.

## Revendications

1. Climatiseur de type multiple comprenant une unité extérieure ; une pluralité d'unités intérieures (3, 4, 5) raccordées à l'unité extérieure ; un circuit réfrigérant ayant des échangeurs de chaleur intérieurs (25, 26, 27) agencés dans les unités intérieures, un compresseur (21) agencé dans l'unité extérieure, une vanne quatre voies (22), un échangeur de chaleur extérieur (23) et une vanne motorisée (24) ; des ventilateurs extérieurs et intérieurs (41) pour produire des écoulements d'air à travers l'échangeur de chaleur extérieur (23) et les échangeurs de chaleur intérieurs (25, 26, 27) ; et des moyens de commande (14) raccordés au circuit de réfrigérant (11) pour contrôler le débit de réfrigérant dans le circuit de réfrigérant (11) afin de contrôler une température d'une pièce ; et comprenant en outre :
un circuit d'alimentation continue (DC) (31) convertissant une tension alternative (CA) fournie par un réseau d'alimentation d'électricité, et transmettant une tension continue variable ;
des premier, deuxième et troisième circuits onduleurs (32, 33, 34) convertissant la tension continue (DC) fournie par ledit circuit d'alimentation continu (DC) (31) en tensions pulsées ;
un premier moteur (21a) étant un moteur à courant continu (DC). recevant la tension pulsée provenant dudit premier circuit onduleur (32) et entraînant ledit compresseur (21) ; et
des deuxième et troisième moteurs (15, 16) étant des moteurs à courant continu (DC). recevant les tensions pulsées depuis lesdits deuxième et troisième circuits onduleurs (33) et (34), et entraînant lesdits ventilateurs extérieurs (41).

2. Climatiseur selon la revendication 1, dans lequel ledit circuit d'alimentation continue (DC). (31) comprend :
un circuit redresseur (DB) raccordé à un réseau d'alimentation d'électricité pour redresser une entrée du réseau d'alimentation d'électricité ;
un condensateur (C) transmettant une tension continue (DC) ;
un filtre actif (61) raccordé entre ledit circuit redresseur (DB) et ledit condensateur (C) pour maintenir la tension dudit condensateur (C) à une valeur définie, et former des formes d'onde d'un courant d'entrée (I) et une tension d'entrée (VI) fournis par le réseau d'alimentation d'électricité en formes similaires.

3. Climatiseur selon la revendication 1 ou 2, dans lequel
lesdits moyens de commande (14) commandent la vitesse de rotation (F) du premier moteur (21a) et le degré (QR) d'ouverture de la vanne motorisée (24) sur la base d'une température de sortie (DO) et d'une pression d'admission (Lₚ) du compresseur (21) dans une opération de refroidissement, et sur la base de la température de sortie (DO) et de la température de condensation (DC) du compresseur (21) dans une opération de chauffage.

4. Climatiseur selon la revendication 1, 2 ou 3, dans lequel
ledit ventilateur extérieur (41) est un ventilateur propulseur ayant des pales creuses épaisses.
